# EUROPÄISCHE PATENTSCHRIFT

(11) **EP 0 798 063 B1**
(45) Veröffentlichungstag und Bekanntmachung des Hinweises auf die Patenterteilung: **12.09.2001**
(21) Anmeldenummer: 97104904.4
(22) Anmeldetag: 22.03.1997
(51) Int. Cl.: B23B 27/00

(54) **Ausdrehwerkzeug**
Boring tool
Outil à aléser

(30) Priorität: 26.03.1996 DE 19611891; 22.10.1996 DE 19643590
(43) Veröffentlichungstag der Anmeldung: 01.10.1997
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dipl.-Ing.

(56) Entgegenhaltungen:
- DE-A- 4 022 579
- US-A- 4 105 360

## Beschreibung

Die Erfindung betrifft ein Ausdrehwerkzeug für die Feinbearbeitung von Bohrungsoberflächen gemäß Oberbegriff des Anspruchs 1 sowie ein Verfahren zur Feinbearbeitung von Bohrungsoberflächen gemäß Oberbegriff des Anspruchs 15.

Ausdrehwerkzeuge sowie Verfahren der hier angesprochenen Art sind bekannt (siehe z.B. US-A-4 105 360). Es hat sich herausgestellt, daß für die Feinbearbeitung von Bohrungsoberflächen häufig mehrere Arbeitsschritte erforderlich sind, wofür auch mehrere Werkzeuge eingesetzt werden müssen. Dies erfordert einen Werkzeugwechsel, der die Feinbearbeitung der Bohrungsoberflächen wesentlich verteuert.

Es ist daher Aufgabe der Erfindung, ein Ausdrehwerkzeug sowie ein Verfahren zu schaffen, die diese Nachteile nicht aufweisen.

Zur Lösung dieser Aufgabe wird ein Ausdrehwerkzeug vorgeschlagen, das die in Anspruch 1 genannten Merkmale aufweist. Das Werkzeug zeichnet sich dadurch aus, daß eine Stelleinrichtung vorgesehen ist, die mit mindestens zwei einander zugeordneten Schneidplatten zwangsgekoppelt ist. Die Stelleinrichtung dient dazu, die Schneidplatten gegenüber der Umfangsfläche, vorzugsweise senkrecht zur Mittelachse des Werkzeugs, zu verlagern, wobei die Schneidplatten -in bezug auf die Mittelachse gesehen- gegensinnig verlagert werden. Jeweils eine der Schneidplatten wird durch die Stelleinrichtung in eine Arbeitsposition und die andere in eine Ruheposition verlagert. Es ist auf diese Weise möglich, mit der einen Schneidplatte eine Vorbearbeitung der Bohrungsoberfläche und mit der anderen eine Nachbearbeitung beziehungsweise Fertigbearbeitung der Bohrungsoberfläche durchzuführen. Ein Werkzeugwechsel kann daher entfallen, so daß die Bearbeitung der Bohrungsoberfläche in wesentlich kürzerer Zeit erfolgen kann, so daß Kosten gespart werden können.

Bevorzugt wird ein Ausführungsbeispiel des Ausdrehwerkzeugs, das sich dadurch auszeichnet, daß die Schneidplatten in Halteeinrichtungen eingesetzt sind, die auch als Kassetten bezeichnet werden. Die Kassetten sind als Ganzes mit Hilfe der Stelleinrichtung in radialer Richtung verlagerbar, die sowohl Zug- als auch Druckkräfte auf die Schneidplatten beziehungsweise Halteeinrichtungen ausüben kann, um die Schneidplatten ein- und auszufahren. Durch den Einsatz der Halteeinrichtungen ist es möglich, die Schneidplatten sicher zu fixieren und mit der Stelleinrichtung zu koppeln.

Bevorzugt wird weiterhin ein Ausführungsbeispiel des Ausdrehwerkzeugs, das sich dadurch auszeichnet, daß die Stellstange mit den Halteeinrichtungen ein Keilgetriebe bildet, wobei entsprechende Keil- und Schrägflächen der Stellstange und der Halteeinrichtungen miteinander zusammenwirken. Die Verstellung der Schneidplatten beziehungsweise Halteeinrichtungen ist dadurch auf einfache, störungsunanfällige Weise möglich.

Weitere Ausgestaltungen ergeben sich aus den Unteransprüchen.

Zur Lösung der genannten Aufgabe wird außerdem ein Verfahren vorgeschlagen, das die in Anspruch 15 genannten Merkmale aufweist. Das Verfahren zeichnet sich dadurch aus, daß die Vorbearbeitung der Bohrungsoberfläche während einer ersten Bewegung des Ausdrehwerkzeugs entlang seiner Mittelachse erfolgt und die Fertigbearbeitung während einer zweiten, entgegengesetzten Bewegung. Während der ersten Bewegung ist die erste Schneidplatte in ihre Arbeitsstellung verlagert, während sich die zweite Schneidplatte in ihrer Ruheposition befindet. Bei der zweiten Axialbewegung des Werkzeugs befinden sich die Schneidplatten jeweils in ihrer entgegengesetzten Position. Es findet also ein Wechsel der Schneidplatten für die beiden Bearbeitungsvorgänge statt.

Weitere Ausgestaltungen des Verfahrens ergeben sich aus den übrigen Unteransprüchen.

Die Erfindung wird im folgenden anhand der Zeichnung näher erläutert. Es zeigen:
- Figur 1: einen schematischen Längsschnitt durch das vordere Ende eines ersten Ausführungsbeispiels eines Ausdrehwerkzeugs, bei der eine erste Arbeitsposition der Schneidplatten angedeutet wird;
- Figur 2: eine schematische Darstellung des Ausdrehwerkzeugs im Längsschnitt, wobei die Schneidplatten jeweils in eine andere Arbeitsposition verlagert wurden;
- Figur 3: eine Stirnansicht des in den Figuren 1 und 2 dargestellten Werkzeugs;
- Figur 4: eine Seitenansicht einer Halteeinrichtung, in die die Schneidplatten des Ausdrehwerkzeugs eingebracht werden, und
- Figur 5: einen Querschnitt durch das vordere Ende eines zweiten Ausführungsbeispiels eines Ausdrehwerkzeugs.

Zur Funktion des Ausdrehwerkzeugs ist kurz folgendes festzuhalten: Normalerweise wird das Ausdrehwerkzeug in Rotation versetzt und in die zu bearbeitende Bohrung eingeführt. Dabei kann mindestens eine Schneidplatte des Werkzeugs mit der Bohrungsoberfläche in Eingriff treten, so daß eine spanabhebende Bearbeitung der Oberfläche erfolgt. Grundsätzlich ist es auch denkbar, daß das Ausdrehwerkzeug feststehend ausgebildet wird und ein Werkstück in Rotation versetzt wird, in welches die zu bearbeitende Bohrung eingebracht ist. Es kann eine Relativbewegung des Werkstücks gegenüber dem Werkzeugs erfolgen, so daß das Ausdrehwerkzeug in die Bohrung eintaucht und die spanabhebende Bearbeitung der Bohrungsoberfläche erfolgt. Es kommt also letztlich nur darauf an, daß für die spanabhebende Bearbeitung eine Relativ-Drehbewegung zwischen Werkzeug und Werkstück gegeben ist, die durch eine Relativ-Axialbewegung in Richtung der Mittel- beziehungsweise Drehachse des Werkzeugs beziehungsweise der Bohrung überlagert wird.

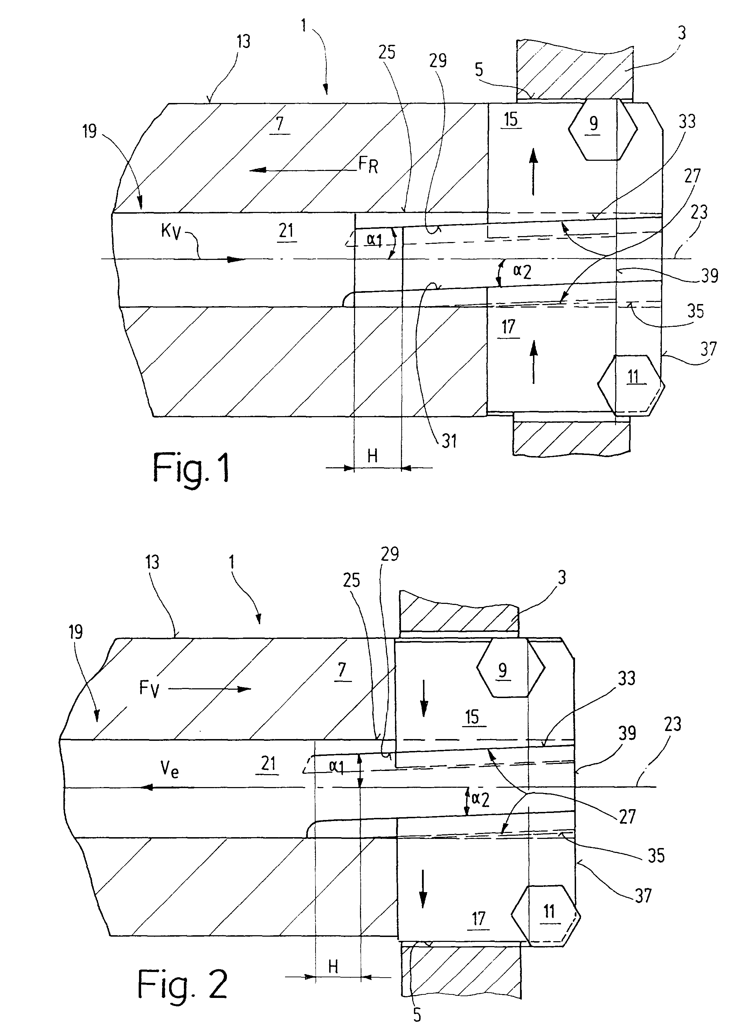

Figur 1 zeigt das vordere Ende eines Ausdrehwerkzeugs 1 im Längsschnitt während der Bearbeitung eines Werkstücks 3, nämlich bei der Bearbeitung einer Bohrungsoberfläche 5 einer Pleuelstange. Das im folgenden kurz als Werkzeug 1 bezeichnete Ausdrehwerkzeug führt während einer Rotationsbewegung eine Vorschubbewegung aus, die bei der Darstellung in Figur 1 von links nach rechts erfolgt. Die Vorschubrichtung ist durch einen Pfeil V_{V} dargestellt.

Das Werkzeug 1 weist einen Grundkörper 7 auf, in den Schneidplatten 9 und 11 eingesetzt sind. Es ist grundsätzlich möglich, die Schneidplatten unmittelbar in Nuten einzusetzen, die in die Umfangsfläche 13 des Grundkörpers 7 eingebracht sind. Hier sind auch als Kassetten bezeichnete Haltevorrichtungen 15 und 17 vorgesehen, in die die Schneidplatten 9 und 11 eingesetzt und mit denen die Schneidplatten fest verspannt sind. Darauf wird unten noch näher eingegangen.

Das Werkzeug 1 ist mit einer Stelleinrichtung 19 versehen, die eine Stellstange 21 umfaßt, die in einer hier konzentrisch zur Mittel- beziehungsweise Drehachse 23 verlaufenden Ausnehmung 25 im Grundkörper 7 des Werkzeugs 1 verschieblich gelagert ist. Die Verschiebungsbewegung der Stellstange 21 erfolgt in Richtung der Mittelachse 23. Die Stellstange 21 bildet entweder unmittelbar mit den Schneidplatten 9 und 11 oder -wie hier dargestelltmit den Haltevorrichtungen 15 und 17 ein Keilgetriebe 27 aus. Dazu ist die Stellstange 21 mit Keilflächen 29 und 31 versehen, die mit Schrägflächen 33 und 35 an den Haltevorrichtungen 15 und 17 zusammenwirken. Die Keilflächen 29 und 31 verlaufen hier parallel zueinander und schließen mit der Mittelachse 23 einen spitzen Winkel α ein, wobei sich der Winkel α₁ der Keilfläche 29 in Richtung zur Stirnfläche 37 des Werkzeugs 1 öffnet, während sich der Winkel α₂ der Keilfläche 31 in entgegengesetzter Richtung öffnet. Die Schrägflächen 33 und 35 verlaufen parallel zu den Keilflächen 29 beziehungsweise 31, so daß hier der gleiche Winkel α₁ beziehungsweise Winkel α₂ gegeben ist.

Bei dem hier dargestellten Ausführungsbeispiel sind die beiden Schneidplatten 9 und 11 diametral gegenüberliegend im Grundkörper 7 des Werkzeugs 1 angeordnet. Entsprechend sind auch die Keilflächen 29 und 31 und die zugehörigen Schrägflächen 33 und 35 der Haltevorrichtungen 15 und 17 diametral gegenüberliegend angeordnet.

Bei der Vorschubbewegung des Werkzeugs 1 in Richtung V_{V} befindet sich die Stellstange 21 in ihrer vollständig zurückgezogenen Position, so daß die Stirnfläche 39 der Stellstange 21 einen Abstand H zur Stirnfläche 37 des Werkzeugs 1 aufweist. Mit H ist der Hub der Stellstange 21 bezeichnet. Durch eine durch einen Pfeil gekennzeichnete, entgegen der Vorschubrichtung V_{V} wirkende Kraft F_{R} wird die Haltevorrichtung 15 beziehungsweise die Schneidplatte 9 gegenüber der Mittelachse 23 in radialer Richtung nach außen bewegt, während die Haltevorrichtung 17 beziehungsweise die Schneidplatte 11 gegenüber der Mittelachse 23 nach innen bewegt wird. Die Bewegungsrichtungen der beiden Haltevorrichtungen beziehungsweise Schneidplatten sind durch Pfeile in Figur 1 angedeutet. Gegenüber dem Grundkörper 7 des Werkzeugs 1 findet also eine gleichgerichtete Bewegung der Schneidplatten 9 und 11 statt. Betrachtet man die Bewegung von der Mittelachse 23 aus, ergibt sich eine gegensinnige Bewegung der Schneidplatten beziehungsweise Haltevorrichtungen durch die Rückzugskraft F_{R} der Stellstange 21, die auch als Zugstange bezeichnet werden kann.

Durch die Rückzugbewegung der Stellstange 21 wird also die Schneidplatte 9 in ihre radial außenliegende Arbeitsposition verlagert, in der die Schneidplatte 9 die Bohrungsoberfläche 5 des Werkstücks 3 einer Vorbearbeitung unterzieht. Bei diesem Bearbeitungsschritt befindet sich entsprechend die gegenüberliegende Schneidplatte 11 in ihrer Ruheposition, das heißt, sie tritt mit der Bohrungsoberfläche 5 nicht in Eingriff.

Durch die Vorschubbewegung des Werkzeugs 1 tritt die Schneidplatte 9 schließlich aus der Bohrungsoberfläche 5 aus. Nun wird die Stellstange 21 mit einer vorwärtgerichteten Kraft F_{V}, wie durch einen Pfeil in Figur 2 angedeutet, bewegt, hier rein beispielhaft so weit, bis die Stirnfläche 39 der Stellstange 21 mit der Stirnfläche 37 des Werkzeugs 1 fluchtet. Durch die Wirkung des Keilgetriebes 27 wird die Schneidplatte 9 beziehungsweise die zugehörige Haltevorrichtung 15, wie durch einen Pfeil angedeutet, nach innen in Richtung zur Dreh- beziehungsweise Mittelachse 23 bewegt, während die gegenüberliegende Schneidplatte 11 und die zugehörige Haltevorrichtung 17 nach außen verlagert werden, was ebenfalls durch einen Pfeil in Figur 2 angedeutet ist. Die Verlagerung der Schneidplatte 9 in eine Ruheposition und das Ausfahren der Schneidplatte 11 in eine Arbeitsposition nach Beendigung der Vorbearbeitung, also nachdem die Schneidplatten 9 und 11 durch die Bohrung hindurchgetreten sind, bewirkt ein Umschalten des Werkzeugs 1 von der Vorauf die Feinbearbeitung.

Die Schneiplatte 9 beziehungsweise 11 kann in ihrer Ruheposition vollständig in den Grundkörper 7 eingetaucht sein, das heißt die Umfangsfläche 13 des Grundkörpers 7 wird nicht überragt. Wichtig ist, daß die durch die Stelleinrichtung 19 erzwungene Relativbewegung der Schneidplatten 9 und 11 bezüglich des Grundkörpers 7 beziehungsweise der Umfangsfläche 13 unter einen beliebigen Winkel zur Mittelachse 23 -vorzugsweise orthogonal - so weit erfolgen kann, daß die jeweilige Schneidplatte in ihre Arbeitsposition verlagert ist und das Werkstück 3 bearbeiten kann und in ihrer Ruheposition außer Eingriff mit der Bearbeitungsfläche steht.

Die Darstellung gemäß Figur 2 unterscheidet sich von der gemäß Figur 1 also lediglich dadurch, daß die Schneidplatten 9 und 11 beziehungsweise die zugehörigen Haltevorrichtungen 15 und 17 in ihre entgegensetzte Position verlagert wurden: Es befindet sich nun die Schneidplatte 9 in ihrer Ruheposition, während sich die Schneidplatte 11 in ihrer Arbeitsposition befindet. Es findet nun eine Umkehrung der Vorschubrichtung des Werkzeugs 1 statt. Das Werkzeug 1 wird nun von rechts nach links durch die Bohrung im Werkstück 3 bewegt, so daß die Bohrungsoberfläche 5 nun einer Fertigbearbeitung durch die Schneidplatte 11 unterzogen werden kann. Der Rücklauf des Werkzeugs 1 beziehungsweise die Rücklaufrichtung ist durch einen Pfeil V_{R} gekennzeichnet.

In den Darstellungen gemäß den Figuren 1 und 2 übereinstimmende Teile wurden mit gleichen Bezugsziffern versehen, so daß insofern auf die Beschreibung zu Figur 1 verwiesen werden kann.

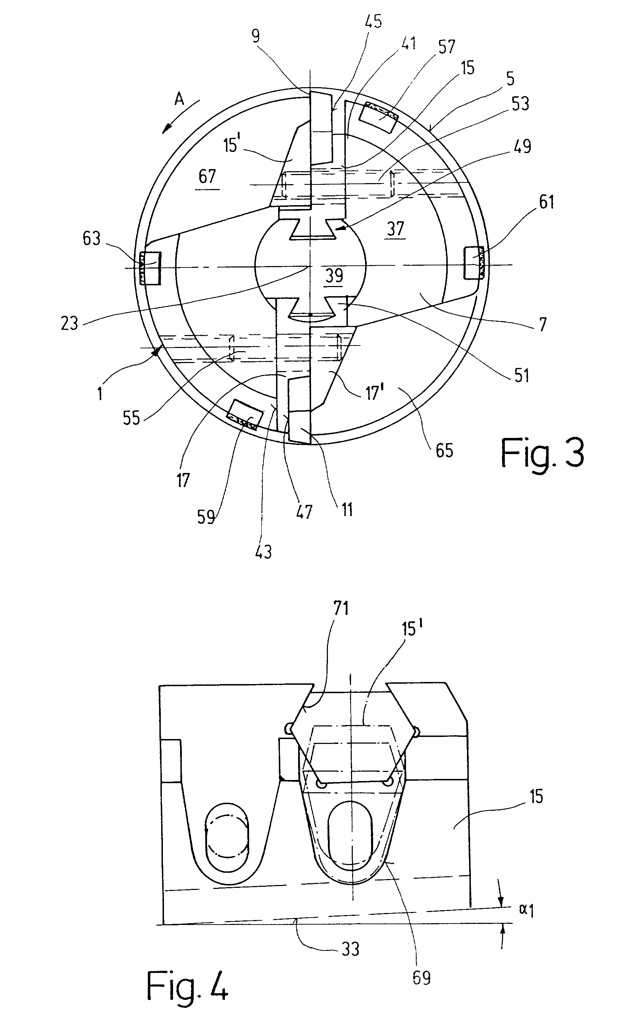

Figur 3 zeigt eine Draufsicht auf die Stirnseite 37 des Werkzeugs 1 beziehungsweise die Stirnseite 39 der Stellstange 21. Die Bohrungsoberfläche 5 ist durch eine Kreislinie angedeutet. Teile die mit denen in Figur 1 und 2 übereinstimmen, tragen gleiche Bezugsziffern, so daß insofern auf die Beschreibung zu den Figuren 1 und 2 verwiesen werden kann.

Aus der Darstellung gemäß Figur 3 ist ersichtlich, daß das Werkzeug 1 lediglich zwei einander zugeordnete Schneidplatten 9 und 11 aufweist, die unter Einfluß der Stelleinrichtung 19 in bezug auf die Mittelachse 23 entgegengesetzte Bewegungen durchführen. In Figur 3 befindet sich die Schneidplatte 11 in ihrer Arbeitsposition und die Schneidplatte 9 in ihrer Ruheposition. Die Stirnansicht zeigt, daß die Haltevorrichtungen 15 und 17 in Nuten 41 und 43 eingesetzt sind, die in den Grundkörper 7 des Werkzeugs 1 eingebracht wurden. Entsprechend sind die Schneidplatten 9 und 11 in Nuten 45 und 47 eingesetzt, die in die Haltevorrichtungen 15 und 17 eingebracht sind.

Aus der Stirnansicht wird insbesondere deutlich, daß die Keilflächen 29 und 31 und die Schrägflächen 33 und 35 fest aufeinander anliegen, wenn die entsprechenden Schneidplatten 9 oder 11 sich in ihrer Arbeitsposition befinden. Die für die Bearbeitung der Bohrungsoberfläche 5 erforderlichen Anpreßkräfte werden also über die Flächen 29, 31, 33 und 35 in das Werkzeug 1 eingeleitet. Im Bereich dieser Flächen sind die Stellstange 21 und die Haltevorrichtungen 15 und 17 durch Formschluß miteinander gekoppelt. Es ist hier eine sogenannte Schwalbenschwanzverbindung 49 zwischen der Stellstange 21 und der Haltevorrichtung 15 und eine zweite Schwalbenschwanzverbindung 51 zwischen der Stellstange 21 und der Haltevorrichtung 17 vorgesehen. Aufgrund dieses Formschlusses werden die Haltevorrichtungen 15 und 17 nicht nur mit nach außen gerichteten Druckkräften des Keilgetriebes 27 beaufschlagt, sondern auch nach innen in Richtung auf die Mittelachse 23 gerichteten Zugkräften. Es ergibt sich also eine Zwangskopplung der Schneidplatten 9 und 11 mit der Stellstange 21 über die Haltevorrichtungen 15 und 17. Auf diese Weise wird sichergestellt, daß die Schneidplatten 9 und 11 in ihre Ruhepositionen verlagert werden und damit nicht mehr in Eingriff mit der Bohrungsoberfläche 5 treten können.

Aus Figur 3 ist noch ersichtlich, daß die Schneidplatte 9 mit Hilfe einer Spannpratze 15' an der Haltevorrichtung 15 fixiert wird, während die Schneidplatte 11 mittels einer Spannpratze 17' in der Haltevorrichtung 17 verankert ist. Die Spannpratzen 15' und 17' werden mit Hilfe von Spannschrauben 53 und 55 festgespannt, die auch in den Grundkörper 7 des Werkzeugs 1 eingreifen, so daß auch eine Verankerung der Haltevorrichtungen 15 und 17 im Grundkörper 7 sichergestellt ist.

Jeder der beiden Schneidplatten 9 und 11 ist mindestens eine Führungsleiste zugeordnet. Bei dem hier dargestellten Ausführungsbeispiel sind jeweils zwei Führungsleisten vorgesehen. Eine erste Führungsleiste 57 beziehungsweise 59 eilt den Schneidplatten 9 beziehungsweise 11 um etwa 25° nach, während eine zweite Führungsleiste 61 beziehungsweise 63 den Schneidplatten 9 beziehungsweise 11 um 90° nacheilt. Die Nacheilung wird auf die durch A gekennzeichnete, gegen den Uhrzeigersinn verlaufende Drehrichtung des Werkzeugs 1 bezogen.

Während einer Drehbewegung des Werkzeugs 1 in Richtung des Pfeils A trägt die in Figur 3 untenliegende Schneidplatte 11, die sich in ihrer Arbeitsposition befindet, Späne von der Bohrungsoberfläche 5 ab. Diese Späne gelangen in einen Spanraum 65, der durch eine Ausnehmung im Grundkörper 7 des Werkzeugs 1 gebildet ist. Ein entsprechender Spanraum 67 ist auch für die Schneidplatte 9 vorgesehen.

Die bei der Bearbeitung der Bohrungsoberfläche 5 anfallenden Späne haben eine Dicke, die von der Verstellbewegung des Werkzeugs 1 abhängen. Die von der Stelleinrichtung 19 bewirkte Verlagerung der Schneidplatten 9 und 11, die auch als Zustellung bezeichnet wird, kann in einem Bereich von 0,005 mm bis 2 mm gewählt werden. Besonders bevorzugt wird eine Verlagerung der Schneidplatte 11 von circa 0,05 mm, so daß sich eine Durchmesservergrößerung der Bohrung von circa 0,1 mm ergibt, nachdem die Bohrungsoberfläche 5 einer Feinbearbeitung durch die Schneidplatte 11 unterzogen wurde.

In Figur 4 wird schließlich noch eine Haltevorrichtung, hier rein beispielhaft die Haltevorrichtung 15 dargestellt, da die Haltevorrichtungen 15 und 17 üblicherweise ähnlich aufgebaut sind. Die Haltevorrichtung 15 weist eine Ausnehmung 71 auf, deren Kontur an die der Schneidplatte 9 angepaßt ist. Beispielhaft wurden hier sechseckige Schneidplatten dargestellt. Entsprechend ist auch die Ausnehmung 71 sechseckig ausgebildet.

In die Haltevorrichtung 15 ist eine Vertiefung 69 eingebracht, in die die Spannpratze 15' drehsicher eingesetzt werden kann, die hier lediglich gestrichelt angedeutet ist. Die Spannpratze 15' ist so angeordnet, daß sie auf die Vorderseite der Schneidplatte 9 wirkt und diese gegen die Haltevorrichtung 15 anpreßt.

In Figur 4 ist angedeutet, daß die Haltevorrichtung 15 auch zwei Ausnehmungen 69 aufweisen kann, die nebeneinanderliegend angeordnet sind. Es ist also denkbar, zwei -in Längsrichtung des Werkzeugs 1 gesehen- Messerplatten hintereinander vorzusehen. Anstelle der sechseckigen Schneidplatte können auch langgestreckte rechteckige Schneidplatten vorgesehen werden, die dann von zwei Spannpratzen fixiert werden.

Figur 4 gibt auch nocheinmal die Schrägfläche 33 der Haltevorrichtung 15 wieder, die Teil des anhand der Figuren 1 bis 3 beschriebenen Keilgetriebes 27 ist. Die Schrägfläche 35 der Haltevorrichtung 17 verläuft allerdings mit entgegengesetzter Neigung. Während sich hier der spitze Winkel α₁ nach rechts öffnet, öffnet sich der Winkel α₂ bei der Haltevorrichtung 17 nach links. Auf die entgegengesetzten öffnungsrichtungen der Winkel α₁ und α₂ wurde oben anhand von Figur 1 im Einzelnen eingegangen.

Werden die Haltevorrichtungen 15 und 17 so lang ausgebildet, wie anhand von Figur 4 ersichtlich, so ist es möglich, die Spannpratze 15' beziehungsweise 17' mit einer ersten Spannschraube und die Haltevorrichtung 15 beziehungsweise 17 mit einer zweiten Spannschraube am Grundkörper 7 des Werkzeugs 1 zu befestigen, die in einem Abstand zur ersten Spannschraube liegt. Bei dem hier dargestellten Ausführungsbeispiel ist die Haltevorrichtung 15 etwa 2,5-mal so lang wie die maximale Breite der Schneidplatte 9. Die Dimensionierung kann an den jeweiligen Auslegungstyp des Werkzeugs 1 angepaßt werden. Entscheident ist allein, daß die Haltevorrichtung 15 sicher im Grundkörper 7 des Werkzeugs 1 gehalten ist und von der Stelleinrichtung 19 möglichst spielfrei geführt wird. Die bei der Bearbeitung der Bohrungsoberfläche 5 auftretenden Reaktionskräfte müssen über die Schneidplatte und die Haltevorrichtung und über die Keil- und Schrägflächen in das Werkzeug 1 eingeleitet werden, ohne daß es zu Setzbewegungen kommt.

Nach allem ergibt sich folgendes Verfahren für die Feinbearbeitung von Bohrungsoberflächen 5 in Werkstücken 3:

Während einer ersten Bewegung des Werkzeugs 1 in Vorschubrichtung V_{V} befindet sich eine erste Schneidplatte, hier die Schneidplatte 9 in einer Arbeitsposition, während die gegenüberliegende Schneidplatte 11 in eine Ruheposition verlagert ist. Die Position der Schneidplatten wird durch eine Stelleinrichtung 19 vorgeben, wie sie anhand der Figuren 1 bis 4 erläutert wurde. Während dieser ersten Bewegung findet eine Vorbearbeitung der Bohrungsoberfläche 5 statt, während sich das Werkzeug gegen den Uhrzeigersinn dreht (siehe den Pfeil A in Figur 3) und in Vorschubrichtung V_{V} (siehe den Pfeil in Figur 1) bewegt wird. Wenn die erste Schneidplatte 9 aus der zu bearbeitenden Bohrung austritt, wird die Stelleinrichtung 19 aktiviert und eine gegensinnige Bewegung der Schneidplatten 9 und 11 zwangsweise durchgeführt. Dadurch gelangt die erste Schneidplatte 9 in ihre Ruheposition, während die zweite Schneidplatte 11 in ihre Arbeitsposition verlagert wird. Es erfolgt also quasi ein Umschalten von der Vor- auf die Feinbearbeitung, wenn die Schneidplatten aus der Bohrung herausgefahren sind beziehungsweise nicht mehr mit der Bohrungsoberfläche 5 in Eingriff stehen. Dazu wird die Stellstange 21, wie in Figur 2 durch einen Pfeil gekennzeichnet, mit einer Kraft F_{V} beaufschlagt und um die Strecke H nach vorne in Richtung der Stirnfläche 37 des Werkzeugs 1 bewegt. Die Bewegungsrichtung der Stellstange 21 hängt von der Wahl des Neigungswinkels der Keil- und Schrägflächen des Keilgetriebes 27 ab.

Nachdem die Schneidplatten 9 und 11 bezüglich der Mittelachse 23 einer gegensinnigen Bewegung unterworfen wurden, findet auch eine Bewegungsumkehr der Vorschubrichtung des Werkzeugs 1 statt. Während des Zurücklaufens des Werkzeugs 1 in Richtung des in Figur 2 dargestellten Pfeiles V_{R} findet eine Fertigbearbeitung der Bohrungsoberfläche 5 durch die Schneidplatte 11 statt, während die erste Schneidplatte 9 die Bohrungsoberfläche nicht berührt.

Eine Verlagerung der Schneidplatten findet also einerseits vor der Vorbearbeitung der Bohrungsoberfläche 5 und vor deren Fertigbearbeitung statt. Während der Bearbeitung wird die Stelleinrichtung 19 nicht aktiviert.

Nach Beendigung der Rücklaufbewegung findet wiederum eine Aktivierung der Stelleinrichtung 19 statt, so daß nun wiederum die erste Schneidplatte 9 in ihre Arbeitsposition bewegt wird, während die zweite Schneidplatte 11 in ihre Ruheposition rückverlagert wird. Es ist nun möglich, die Bohrungsoberfläche 5 eines weiteren Werkstücks 3 zu bearbeiten. Zwischen zwei Bearbeitungsschritten werden die Schneidplatten beziehungsweise deren Haltevorrichtungen um 0,005 mm bis 2 mm verlagert. Vorzugsweise findet eine Verlagerung um circa 0,05 mm statt, bevor die Fertigbearbeitung erfolgt, so daß sich zwischen Vor- und Fertigbearbeitung eine Durchmesserdifferenz von circa 0,1 mm ergibt.

Nach allem wird deutlich, daß für die Vor- und Fertigbearbeitung ein und desselben Werkstücks ein einziges Werkzeug eingesetzt werden kann. Ein Werkzeugwechsel ist nicht mehr erforderlich. Dies führt bei der Bearbeitung von Werkstücken zu einer wesentlichen Zeitersparnis. Außerdem zeigt sich, daß zwei Arbeitsschritte während einer Vor- und Rücklaufbewegung des Werkzeugs durchgeführt werden können, nämlich zunächst eine Vorbearbeitung und dann, während der Rücklaufbewegung, eine Fertigbearbeitung der Bohrungsoberfläche 5. Auch dies führt zu einer wesentlichen Zeitersparnis, da zwei Arbeitsgänge bei der Vor- und Rücklaufbewegung des Werkzeugs stattfinden können.

Die Vorbearbeitung des Werkstücks erfolgt also im Vorlauf, wobei die Schneidplatte 9 als sogenanntes "stoßendes Messer" wirkt. Die Fertigbearbeitung des Werkstücks findet im Rücklauf statt, wobei die Schneidplatte 11 als sogenanntes "ziehendes Messer" wirkt. Es ergibt sich hier eine qualitativ besonders gute Bohrungsoberfläche, so daß eine Feinbearbeitung der Bohrung gegeben ist.

Da sich die Schneidplatte 9 -bezogen auf die Vorschubbewegung- im vorderen Bereich der Haltevorrichtung 15 befindet, ergibt sich durch die Führungsleisten 57 und 61, deren Länge wesentlich größer ist als die Breite der Schneidplatte, eine sogenannte Nachführung. Die Führungsleisten führen das Werkzeug 1 also in einen Bereich, der -bezogen auf die Vorschubbewegung- der Schneidplatte 9 nacheilt.

Auch bei der Haltevorrichtung 17 ist die Schneidplatte 11 im rechten Bereich nahe der Stirnseite 37 des Werkzeugs 1 angeordnet. Die Führungsleisten 59 und 63 der Schneidplatte 11 reichen weit über die Schneidplatte 11 hinweg nach links, so daß eine sogenannte Vorführung ergibt, was zu einer besonders gleichmäßigen Oberflächenqualität der Bohrung führt.

Das Werkzeug 1 ist auf übliche Weise mit einer Werkzeugmaschine gekoppelt. Auch wird die Vorschubund Rückzugbewegung der Stellstange auf herkömmliche Weise bewirkt. Es ist im übrigen denkbar, der Stellstange 21 einen Antrieb zuzuordnen, der vollständig im Werkzeug 1 angeordnet ist und beispielsweise aus einem Elektromotor besteht, der die Stellstange 21 über eine Gewindestange vor- und zurückbewegt. Eine derartige Ausgestaltung vereinfacht den Wechsel des Werkzeugs 1 und erlaubt auch einen automatischen Werkzeugwechsel.

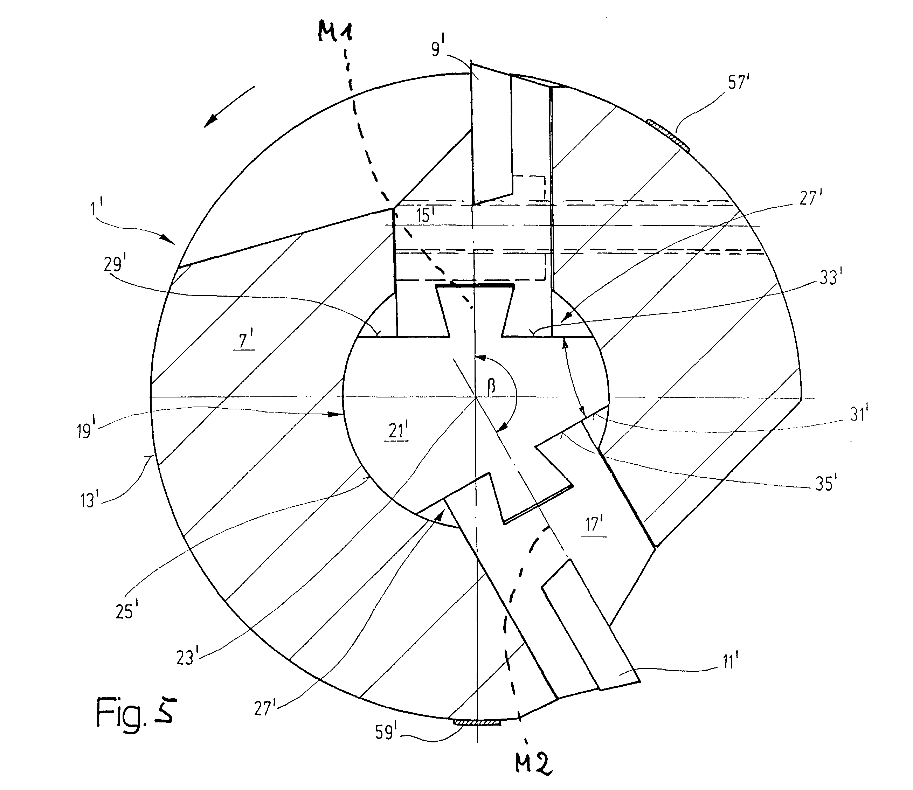

Figur 5 zeigt einen Querschnitt durch ein im folgenden als Werkzeug 1' bezeichnetes Ausdrehwerkzeug mit einem Grundkörper 7', in den hier zwei Schneidplatten 9' und 11' eingesetzt sind. Die Schneidplatten überragen in ihrer Arbeitsposition die Umfangsfläche 13' des Werzeugs 1' und können eine Bohrungsoberfläche in einem Werkstück bearbeiten. Bei dem hier dargestellten Ausführungsbeispiel ist die oben dargestellte erste Schneidplatte 9' in ihrer Arbeitsposition beziehungsweise ausgefahrenen Stellung dargestellt, während sich die zweite Schneidplatte 11' in ihrer zurückgezogen Ruheposition befindet.

Die Schneidplatten sind in Haltevorrichtungen 15' und 17' eingesetzt und mit diesen auf bekannte Weise, beispielsweise mit Hilfe mindestens einer Spannschraube, fest verspannt.

Das Werkzeug 1' ist mit einer Stelleinrichtung 19' versehen, die eine Stellstange 21' umfaßt. Diese ist in einer hier konzentrisch zur Mittel- beziehungsweise Drehachse 23' des Werkzeugs 1' verlaufenden Ausnehmung 25' im Grundkörper 7' verschieblich gelagert. Die Verschiebungsbewegung der Stellstange 21' erfolgt in oder entgegen der Richtung der Mittelachse 23'. Die Stellstange 21' bildet entweder unmittelbar mit den Schneidplatten 9' und 11', oder -wie hier dargestellt- mit den den Schneidplatten zugeordneten Haltevorrichtungen 15' und 17' ein Keilgetriebe 27' aus. Dazu ist die Stellstange 21' mit Keilflächen 29' und 31' versehen, die mit Schrägflächen 33' und 35' an den Haltevorrichtungen 15' und 17' zusammenwirken.

Die Keilflächen 29' und 31' sowie die Schrägflächen 33' und 35' sind nicht parallel zueinander angeordnet. Sie schließen einen Winkel miteinander ein, der > 0° ist. Er kann in einem Bereich von 10° bis 60°, insbesondere von 20° bis 40° liegen. Besonders bewährt hat sich jedoch ein Winkel von 30°. Entsprechend eilt die zweite Schneidplatte 11' -in der durch einen Pfeil angedeuteten Drehrichtung des Werkzeugs gesehen- der ersten Schneidplatte 9' um einen Winkel β von 150° nach. Dieser Winkel kann entsprechend dem Obengesagten in einem Bereich von 170° bis 130° liegen, insbesondere von 160° bis 140°. Besonders bewährt hat sich ein Winkel β von 150°. Wesentlich ist, daß der Winkel β kleiner als 180° ist.

Dadurch, daß die beiden Schneidplatten 9' und 11' nicht diametral gegenüberliegend angeordnet sind, ist es möglich, der ersten Schneidplatte 9' eine Führungsleiste 59' zuzuordnen, die der ersten Schneidplatte 9' hier diametral gegenüberliegend angeordnet ist. Wesentlich ist, daß diese Führungsleiste 59' eine Abstützung für die erste Schneidplatte 9' bildet, während diese eine Bohrungsoberfläche bearbeitet.

Es ist außerdem noch eine Führungsleiste 57' vorgesehen, die der ersten Schneidplatte 9' nacheilt.

Bei der Bearbeitung einer Bohrungsoberfläche mit der ersten Schneidplatte 9' kann also eine Abstützung des Werkzeugs außer an der Schneidplatte 9' an den beiden Führungsleisten 57' und 59' stattfinden. Bei einer Bearbeitung der Bohrungsoberfläche mit der zweiten Schneidplatte 11' ist die erste Schneidplatte 9' in ihrer zurückgezogenen Position angeordnet, so daß sich das Werkzeug 1' außer an der zweiten Schneidplatte 11' an der der zweiten Schneidplatte 11' nacheilenden Führungsleiste 59' und der Führungsleiste 57' abstützt.

Bei einer Verlagerung der Stellstange 21' findet -bezüglich der Mittelachse 23'- eine entgegengesetzte Positionierung der Schneidplatten 9' und 11' statt: Während die erste Schneidplatte 9' ausgefahren wird, wird die zweite Schneidplatte 11' eingefahren, so daß letztere nicht mit der Bohrungsoberfläche in Eingriff tritt. Bei einer entgegengesetzten Bewegung der Stellstange 21' wird die zweite Schneidplatte 11' ausgefahren während die erste Schneidplatte 9' eingefahren wird. Die beiden Schneidplatten 9' und 11' beziehungsweise deren Haltevorrichtungen 15' und 17' sind mit der Stellstange 21' zwangsgekoppelt und im Grundkörper 7' gegenüber dessen Umfangsfläche 13' verlagerbar. Dies wird hier durch eine Schwalbenschwanzführung gewährleistet. Die Zuordnung der Schneidplatten besteht darin, daß diese durch die Stelleinrichtung in bezug auf die Dreh- oder Mittelachse des Werkzeugs gegensinnig verlagerbar sind, wobei die Stelleinrichtung jeweils eine Schneidplatte in eine Arbeitsposition und die andere Schneidplatte in eine Ruheposition verlagert. Das Werkzeug zeichnet sich dadurch aus, daß die Schneidplatten so gegeneinander versetzt angeordnet sind, daß die zweite Schneidplatte der ersten -in Drehrichtung des Ausdrehwerkzeugs gesehen- um einen Winkel β nacheilt, der kleiner als 180° ist. Bevorzugt wird ein Winkel β von 170° bis 130°, insbesondere von 160° bis 140°. Der ersten Schneidplatte ist mindestens eine Führungsleiste zugeordnet, die der zweiten Schneidplatte nacheilt und die die erste Schneidplatte in der zu bearbeitenden Bohrung abstützt.

Die Schneidplatten und Führungsleisten sind so im Grundkörper 7' des Werkzeugs 1' angeordnet, daß bei einer Vorschubbewegung, während die erste Schneidplatte 9' mit der Bohrungswandung in Eingriff tritt, eine voreilende Führung gegeben ist, während bei einer Rückzugsbewegung des Werkzeugs 1', bei der die zweite Schneidplatte 11' mit der Bohrungswandung in Eingriff tritt, eine nacheilende Führung gegeben ist.

Das Werkzeug 1' eignet sich besonders für die Bearbeitung einer Bohrungsoberfläche einer Pleuelstange, wobei während einer Vorschubbewegung eine Vor- beziehungsweise Grundbearbeitung der Bohrungsoberfläche stattfindet, während bei einer Rückzugsbewegung des Werkzeugs 1' eine Feinbearbeitung der Bohrungsoberfläche durch die zweite Schneidplatte 11' erfolgt.

Wenn man durch das in Figur 5 dargestellte Werkzeug 1' einen Längsschnitt führen würde, der einerseits in einer ersten Ebene läge, die mit der Mittelebene M1 der Haltevorrichtung 15' zusammenfällt, und andererseits in einer zweiten Ebene, die mit der Mittelebene M2 der Haltevorrichtung 17'zusammenfällt, so ergäben sich auch hier die in den Figuren 1 und 2 dargestellten Merkmale. Insoweit stimmen also die Werkzeuge 1 und 1' überein. Die Erläuterungen zu den Figuren 1 und 2 lassen sich daher -ebenso wie die Erläuterungen zu Figur 3- auf das in Figur 5 dargestellte Werkzeug 1' übertragen.

Aus dem Gesagten wird deutlich, daß grundsätzlich auch mehr als zwei Schneidplatten in einem Werkzeug 1, 1' vorgesehen werden können, die von einer Stelleinrichtung ein- und ausgefahren werden. Eine besonders hohe Festigkeit des Werkzeugs ergibt sich jedoch, wenn nur zwei zusammenwirkende Schneidplatten vorgesehen werden, die vorzugsweise diametral oder etwa diametral (siehe Figur 5) gegenüberliegend angeordnet sind, so daß eine besonders einfache Ansteuerung über eine einzige Stelleinrichtung möglich ist.

## Patentansprüche

1. Ausdrehwerkzeug für die Feinbearbeitung von Bohrungsoberflächen mit mindestens einer Schneidplatte und wenigstens einer Führungsleiste, die in in die Umfangsfläche des Grundkörpers des Ausdrehwerkzeugs eingebrachte Nuten eingesetzt und fixiert sind, **dadurch gekennzeichnet, daß** eine Stelleinrichtung (19) vorgesehen ist, die mit mindestens zwei einander zugeordneten Schneidplatten (9,11) zwangsgekoppelt ist, daß die Schneidplatten (9,11) mittels der Stelleinrichtung (19) im Grundkörper (7) gegenüber der Umfangsfläche (13) verlagerbar angeordnet sind, daß die Zuordnung der Schneidplatten (9,11) darin besteht, daß diese -in bezug auf die Dreh- oder Mittelachse (23) des Ausdrehwerkzeugs (1)- gegensinnig verlagerbar sind und daß die Stelleinrichtung (19) jeweils eine Schneidplatte (9;11) in eine Arbeitsposition und die andere Schneidplatte (11;9) in eine Ruheposition verlagert.

2. Ausdrehwerkzeug nach Anspruch 1, **dadurch gekennzeichnet, daß** die Schneidplatten (9,11) in radialer Richtung zur Mittelachse (23) verlagerbar sind.

3. Ausdrehwerkzeug nach Anspruch 1 oder 2, **dadurch gekennzeichnet, daß** die Schneidplatten (9,11) in Haltevorrichtungen (15,17) eingesetzt sind, die in in die Umfangsfläche (13) des Grundkörpers (7) eingebrachte Nuten (41,43) in radialer Richtung verlagerbar gelagert und mit der Stelleinrichtung (19) gekoppelt sind.

4. Ausdrehwerkzeug nach einem der vorhergehenden Ansprüche, **dadurch gekennzeichnet, daß** die Schneidplatten (9,11) einander diametral gegenüberliegend angeordnet sind.

5. Ausdrehwerkzeug nach einem der vorhergehenden Ansprüche, **dadurch gekennzeichnet, daß** jeder Schneidplatte (9,11) jeweils zwei Führungsleisten (57,61;59,63) zugeordnet sind.

6. Ausdrehwerkzeug nach einem der vorhergehenden Ansprüche, **dadurch gekennzeichnet, daß** die Stelleinrichtung (19) eine in Richtung der Mittelachse (23) des Ausdrehwerkzeugs (1) verlaufende Stellstange (21) aufweist.

7. Ausdrehwerkzeug nach Anspruch 6, **dadurch gekennzeichnet, daß** die Stellstange (21) mit den Haltevorrichtungen (15,17) ein Keilgetriebe (27) bildet und den Haltevorrichtungen (15,17) zugeordnete Keilflächen (29,31) aufweist, die mit an den Halteeinrichtungen vorgesehenen Schrägflächen (33,35) zusammenwirken.

8. Ausdrehwerkzeug nach Anspruch 6 oder 7, **dadurch gekennzeichnet, daß** die Schrägflächen (33,35) mit der Mittelachse (23) der Stellstange (21) einen -vorzugsweise gleichen- Winkel (α₁,α₂) einschließen, aber in entgegengesetzten Richtungen ansteigen beziehungsweise abfallen.

9. Ausdrehwerkzeug nach einem der Ansprüche 2 bis 8, **dadurch gekennzeichnet, daß** die Stelleinrichtung (19) mit den Schneidplatten (9,11) beziehungsweise mit deren Haltevorrichtungen (15,17) durch Formschluß gekoppelt ist.

10. Ausdrehwerkzeug nach Anspruch 9, **dadurch gekennzeichnet, daß** die Kopplung mittels einer Schwalbenschwanzverbindung (49,51) erfolgt.

11. Ausdrehwerkzeug nach einem der vorhergehenden Ansprüche, **dadurch gekennzeichnet, daß** der durch die Stelleinrichtung (19) bewirkte Verlagerungsweg 0,005 mm bis 2 mm, vorzugsweise circa 0,05 mm beträgt.

12. Ausdrehwerkzeug nach einem der vorhergehenden Ansprüche, **dadurch gekennzeichnet, daß** die Schneidplatten (9',11') gegeneinander versetzt angeordnet sind, wobei die zweite Schneidplatte (11') der ersten Schneidplatte (9') -in Drehrichtung des Ausdrehwerkzeugs (1') gesehen- um einen Winkel β von < 180°, vorzugsweise von 170° bis 130°, insbesondere von 160° bis 140° nacheilt und daß der ersten Schneidplatte (9') mindestens eine Führungsleiste (59') zugeordnet ist, die der zweiten Schneidplatte Schneidplatte (11') nacheilt und die die erste Schneidplatte (9') in der zu bearbeitenden Bohrung abstützt.

13. Ausdrehwerkzeug nach Anspruch 12, **dadurch gekennzeichnet, daß** die zweite Schneidplatte (11') der ersten Schneidplatte (9') um 150° nacheilt.

14. Ausdrehwerkzeug nach Anspruch 12 oder 13, **dadurch gekennzeichnet, daß** der ersten Schneidplatte (9') eine Führungsleiste (59') diametral gegenüberliegend zugeordnet ist.

15. Verfahren zur Feinbearbeitung einer Bohrungsoberfläche mit Hilfe eines Ausdrehwerkzeugs nach einem der Ansprüche 1 bis 11, **dadurch gekennzeichnet, daß** die Vorbearbeitung der Bohrungsoberfläche (5) während einer ersten Bewegung des Ausdrehwerkzeugs (1) entlang seiner Mittelachse (23) erfolgt und die Fertigbearbeitung (Feinbearbeitung) während einer zweiten, entgegengesetzten Bewegung, und daß während der ersten Bewegung die erste Schneidplatte (9) in ihre Arbeitsstellung und die zweite Schneidplatte (11) in ihre Ruhestellung verfahren ist, und daß während der zweiten Bewegung die erste Schneidplatte (9) in ihre Ruhestellung und die zweite Schneidplatte (11) in Arbeitsstellung verfahren ist.

16. Verfahren nach Anspruch 15, **dadurch gekennzeichnet, daß** die Vorbearbeitung der Bohrungsoberfläche (5) während einer Vorlaufbewegung und die Fertigbearbeitung während einer Rücklaufbewegung des Ausdrehwerkzeugs (1) erfolgt.

17. Verfahren nach Anspruch 15 oder 16, **dadurch gekennzeichnet, daß** die Verlagerung der Schneidplatten (9,11) zwischen zwei aufeinanderfolgenden Bearbeitungsschritten erfolgt.

18. Verfahren nach einem der Ansprüche 15 bis 17, **dadurch gekennzeichnet, daß** die Schneidplatten (9,11) zwischen zwei Bearbeitungsschritten um 0,005 mm bis 2 mm, vorzugsweise um circa 0,05 mm verlagert werden.

## Claims

1. Boring tool for the fine machining of bore surfaces, with at least one cutting plate and at least one guide bead fitted and fixed in grooves which are formed in the circumferential surface of the main body of the boring tool, **characterized in that** an adjustment device (19) is provided which is forcibly coupled to at least two cutting plates (9, 11) allocated to each other, in that the cutting plates (9, 11) can be displaced in the main body (7) relative to the circumferential surface (13) by means of the adjustment device (19), in that the allocation of the cutting plates (9, 11) is such that these can be displaced in opposite directions relative to the axis of rotation or centre axis (23) of the boring tool (1), and in that the adjustment device (19) in each case displaces one cutting plate (9; 11) into a work position and the other cutting plate (11; 9) into a rest position.

2. Boring tool according to Claim 1, **characterized in that** the cutting plates (9, 11) can be displaced in the radial direction to the centre axis (23).

3. Boring tool according to Claim 1 or 2, **characterized in that** the cutting plates (9, 11) are fitted in holding devices (15, 17) which are mounted, in a radially displaceable manner, in grooves (41, 43) which are formed in the circumferential surface (13) of the main body (7) and are coupled to the adjustment device (19).

4. Boring tool according to one of the preceding claims, **characterized in that** the cutting plates (9, 11) are arranged lying diametrically opposite each other.

5. Boring tool according to one of the preceding claims, **characterized in that** two guide beads (57, 61; 59, 63) are allocated to each cutting plate (9, 11).

6. Boring tool according to one of the preceding claims, **characterized in that** the adjustment device (19) has an adjustment rod (21) extending in the direction of the centre axis (23) of the boring tool (1) .

7. Boring tool according to Claim 6, **characterized in that** the adjustment rod (21) forms with the holding devices (15, 17) a wedge mechanism (27) and has wedge surfaces (29, 31) allocated to the holding devices (15, 17), which wedge surfaces (29, 31) cooperate with oblique surfaces (33, 35) provided on the holding devices.

8. Boring tool according to Claim 6 or 7, **characterized in that** the oblique surfaces (33, 35) enclose with the centre axis (23) of the adjustment rod (21) a preferably equal angle (α₁, α₂), but rise or fall in opposite directions.

9. Boring tool according to one of Claims 2 to 8, **characterized in that** the adjustment device (19) is coupled to the cutting plates (9, 11) or to their holding devices (15, 17) by a shape fit.

10. Boring tool according to Claim 9, **characterized in that** the coupling is effected by means of a dovetail connection (49, 51).

11. Boring tool according to one of the preceding claims, **characterized in that** the displacement travel effected by the adjustment device (19) is 0.005 mm to 2 mm, preferably about 0.05 mm.

12. Boring tool according to one of the preceding claims, **characterized in that** the cutting plates (9', 11') are arranged offset relative to each other, the second cutting plate (11') lagging behind the first cutting plate (9') - viewed in the direction of rotation of the boring tool (1') - by an angle β of < 180°, preferably 170° to 130°, in particular 160° to 140°, and in that the first cutting plate (9') is allocated at least one guide bead (59') which lags behind the second cutting plate (11') and which supports the first cutting plate (9') in the bore which is to be machined.

13. Boring tool according to Claim 12, **characterized in that** the second cutting plate (11') lags behind the first cutting plate (9') by 150°.

14. Boring tool according to Claim 12 or 13, **characterized in that** a guide bead (59') is arranged lying diametrically opposite the first cutting plate (9').

15. Method for the fine machining of a bore surface with the aid of a boring tool according to one of Claims 1 to 11, **characterized in that** the preliminary machining of the bore surface (5) takes place during a first movement of the boring tool (1) along its centre axis (23) and the finish-machining (fine machining) takes place during a second movement in the opposite direction, and in that during the first movement the first cutting plate (9) is moved into its work position and the second cutting plate (11) is moved into its rest position, and in that during the second movement the first cutting plate (9) is moved into its rest position and the second cutting plate (11) is moved into the work position.

16. Method according to Claim 15, **characterized in that** the preliminary machining of the bore surface (5) takes place during an advance movement and the finish-machining takes place during a reverse movement of the boring tool (1).

17. Method according to Claim 15 or 16, **characterized in that** the displacement of the cutting plates (9, 11) takes place between two successive machining steps.

18. Method according to one of Claims 15 to 17, **characterized in that** the cutting plates (9, 11) are displaced, between two machining steps, by 0.005 mm to 2 mm, preferably by about 0.05 mm.

## Revendications

1. Outil à aléser (alésoir) pour l'usinage fin de surfaces de perçage comportant au moins une plaque de coupe et au moins une barrette de guidage placées dans des rainures réalisées dans la surface périphérique du corps de base de l'alésoir bloqué dans celles-ci,
**caractérisé en ce qu'**
il comporte un moyen de réglage (19) couplé de force avec au moins deux plaques de coupe (9, 11) associées,
les plaques de coupe (9, 11) sont montées mobiles par l'installation de réglage (19) dans le corps de base (7), par rapport à la surface périphérique (13),
l'association des plaques de coupe (9, 11) consiste à déplacer celles-ci en sens opposés (par rapport à l'axe de rotation ou axe médian (23) de l'alésoir (1) et,
l'installation de réglage (19) amène chaque fois une plaque de coupe (9;11) dans une position de travail et l'autre plaque de coupe (11;9) dans une position de repos.

2. Alésoir selon la revendication 1,
**caractérisé en ce que**
les plaques de coupe (9, 11) sont mobiles dans la direction radiale par rapport à l'axe central (23).

3. Alésoir selon l'une quelconque des revendications 1 ou 2,
**caractérisé en ce que**
les plaques de coupe (9, 11) sont placées dans des dispositifs de fixation (15, 17) montés mobiles dans la direction radiale, dans des rainures (41, 43) prévues dans la surface périphérique (13) du corps de base (7), et sont couplées à l'installation de réglage (19).

4. Alésoir selon l'une quelconque des revendications précédentes,
**caractérisé en ce que**
les plaques de coupe (9, 11) sont diamétralement opposées.

5. Alésoir selon l'une quelconque des revendications précédentes,
**caractérisé en ce qu'**
à chaque plaque de coupe (9, 11) sont associées chaque fois deux barrettes de guidage (57, 61 ; 59, 63).

6. Alésoir selon l'une quelconque des revendications précédentes,
**caractérisé en ce que**
l'installation de réglage (19) comporte une tige de réglage (21) suivant l'axe central (23) de l'alésoir (1).

7. Alésoir selon la revendication 6,
**caractérisé en ce que**
la tige de réglage (21) forme une transmission à coin (27) avec les dispositifs de fixation (15, 17), et comporte des surfaces en forme de coins (29, 31) associées aux dispositifs de fixation (15, 17), ces surfaces en forme de coins coopérant avec des surfaces en biais (33, 35) prévues sur les installations de fixation.

8. Alésoir selon l'une quelconque des revendications 6 ou 7,
**caractérisé en ce que**
les surfaces en biais (33, 35) font avec l'axe (23) de la tige de réglage (21) un angle (α₁, α₂) de préférence égal mais descendant ou montant dans des directions opposées.

9. Alésoir selon l'une quelconque des revendications 2 à 8,
**caractérisé en ce que**
l'installation de réglage (19) est couplée aux plaques de coupe (9, 11) ou à leurs dispositifs de fixation (15, 17) par une liaison par la forme.

10. Alésoir selon la revendication 9,
**caractérisé en ce que**
le couplage est assuré par une liaison en queue d'aronde (49, 51).

11. Alésoir selon l'une quelconque des revendications précédentes,
**caractérisé en ce que**
la course de déplacement produite par l'installation de réglage (19) est de l'ordre de 0,005 mm à 2 mm, et de préférence de l'ordre de 0,05 mm.

12. Alésoir selon l'une quelconque des revendications précédentes,
**caractérisé en ce que**
les plaques de coupe (9', 11') sont décalées l'une par rapport à l'autre, la seconde plaque de coupe (11') étant placée après la première plaque de coupe (9') (dans le sens de rotation de l'alésoir 1') avec un décalage d'un angle β inférieur à 180° et de préférence de l'ordre de 170° à 130°, notamment de 160° à 140°, en aval, tandis que la première plaque de coupe (9') est associée à au moins une barrette de guidage (59') en aval de la seconde plaque de coupe (11') et soutenant la première plaque de coupe (9') dans le perçage à travailler.

13. Alésoir selon la revendication 12,
**caractérisé en ce que**
la seconde plaque de coupe (11') est en arrière de 150° par rapport à la première plaque de coupe (9').

14. Alésoir selon l'une quelconque des revendications 12 ou 13,
**caractérisé en ce qu'**
une barrette de guidage (59') est opposée à la première plaque de coupe (9') dans une position diamétralement opposée.

15. Procédé d'usinage fin d'une surface de perçage à l'aide d'un alésoir selon l'une quelconque des revendications 1 à 11,
**caractérisé en ce que**
le pré-usinage de la surface (5) du perçage se fait au cours d'un premier mouvement de l'alésoir (1) le long de son axe médian (23), et l'usinage de finition (usinage fin) se fait au cours d'un second mouvement, dans la direction opposée, tandis que, pendant le premier mouvement, la première plaque de coupe (9) est mise dans sa position de travail et la seconde plaque de coupe (11) dans sa position de repos et, pendant le second mouvement, la première plaque de coupe (9) est mise en position de repos et la seconde plaque de coupe (11) en position de travail.

16. Procédé selon la revendication 15,
**caractérisé en ce que**
l'usinage préalable de la surface du perçage (5) se fait pendant le mouvement d'avance, et l'usinage de finition se fait pendant le mouvement de retour de l'alésoir (1).

17. Procédé selon l'une quelconque des revendications 15 ou 16,
**caractérisé en ce que**
le déplacement des plaques de coupe (9, 11) se fait entre deux étapes d'usinage successives.

18. Alésoir selon l'une quelconque des revendications 15 à 17,
**caractérisé en ce que**
les plaques de coupe (9, 11) sont déplacées entre deux étapes d'usinage de 0, 005 mm jusqu'à 2 mm et de préférence d'environ 0,05 mm.
